# DEMANDE DE BREVET EUROPEEN

(11) **EP 1 617 687 A2**
(43) Date de publication de la demande: **18.01.2006**
(21) Numéro de dépôt: 05106251.1
(22) Date de dépôt: 08.07.2005
(51) Int. Cl.: H04Q 7/22

(54) **Procédé d'accusé de réception MMS, terminal et réseau correspondant**

(30) Priorité: 08.07.2004 FR 0407617
(71) Demandeur: Sagem Défense Sécurité, 75015 Paris (FR)
(72) Inventeur: Kanaan, Nadi, 75016 Paris (FR)
(74) Mandataire: Callon de Lamarck, Jean-Robert

(57) **Abrégé**

L'invention concerne un procédé de récupération différée d'un message MMS sur un réseau (2) de télécommunications par un terminal (1) de téléphonie, comportant une étape consistant à envoyer au réseau (2), à partir du terminal (1), une instruction pour que le réseau (2) envoie le message MMS vers ledit terminal (1), caractérisé en ce qu'il comporte en outre une étape consistant à envoyer une notification d'indication de réception du message MMS du terminal (1) vers le réseau à la suite de l'envoi du message MMS vers le terminal, ladite notification d'indication comportant un champ d'état de réception effective du message MMS par le terminal.

L'invention concerne également un terminal et un réseau de mise en oeuvre du procédé.

## Description

### DOMAINE TECHNIQUE GENERAL

La présente invention concerne les télécommunications.

Plus précisément, elle concerne un procédé d'accusé de réception de messages MMS ou « multimedia messaging service » selon la terminologie anglo-saxonne généralement utilisée par l'homme du métier.

### ETAT DE L'ART

On voit se développer sur les réseaux de télécommunications l'échange des messages MMS, c'est à dire des messages pouvant contenir un texte, des images ou des sons, et qui peuvent être reçus ou transmis par un appareil mobile ou fixe.

Il existe plusieurs protocoles de récupération de messages MMS sur un réseau de télécommunications. On se reportera avantageusement à la norme F-MMS pour une description plus détaillée des protocoles de l'état de l'art sur les réseaux fixes.

Un premier protocole possible est un protocole de récupération automatique du message MMS à partir d'un réseau. On peut également utiliser la terminologie anglaise de « automatic retrieval ».

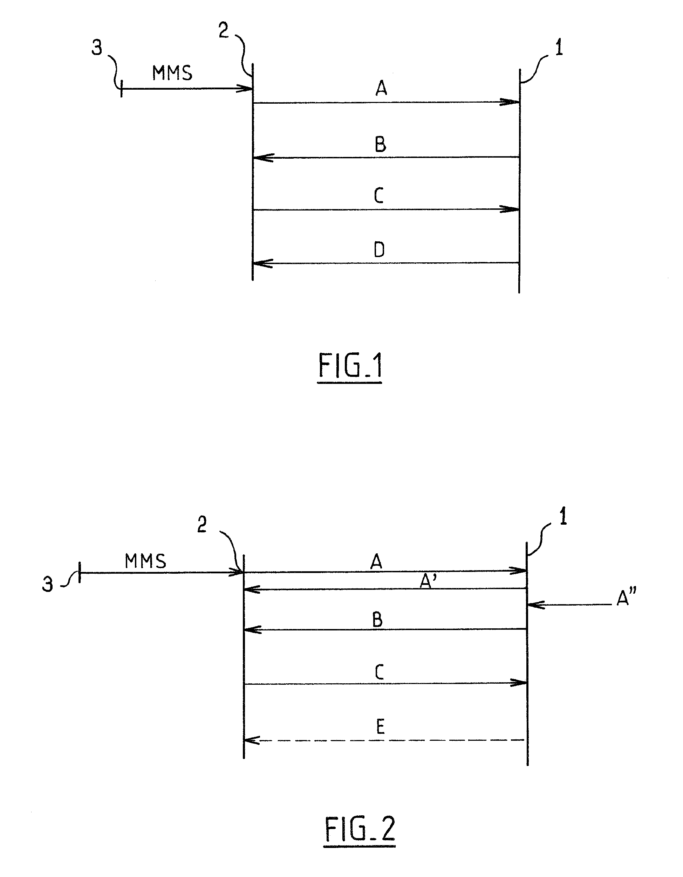

Selon le premier protocole, dont les principales étapes sont illustrées schématiquement sur la figure 1, le message MMS est récupéré automatiquement sur un réseau 2 par un terminal 1.

Le réseau 2 reçoit tout d'abord de la part d'un terminal 3 un message MMS à destination du terminal 1.

Lors d'une étape A, le réseau 2 envoie un message SMS ou « Short Message Service » de notification au terminal 1, pour lui indiquer qu'il a, sur des moyens de stockage du réseau 2, un message MMS pour le terminal 1.

Le terminal 1 envoie directement et automatiquement au réseau 2, lors d'une étape B, une instruction en protocole HTTP (ou « HyperText Transport Protocol ») pour demander au réseau 2 de lui transférer le message MMS.

Le réseau 2 envoie alors le message MMS vers des moyens mémoire du terminal 1 lors d'une étape C.

Une fois que la transmission est effectuée, le terminal 1, lors d'une étape D, envoie une notification d'acquittement indiquant un état - ou « status » selon la terminologie anglo-saxonne - de réception du message MMS. L'état de la notification indique si le message MMS a été reçu ou non par le terminal 1. Ladite notification d'acquittement s'appelle la « Notification.response » dans la norme F-MMS.

Un deuxième protocole est un protocole de récupération différée du message MMS stocké sur le réseau. On peut également utiliser la terminologie anglaise de « deferred retrieval » pour désigner ce deuxième protocole.

La figure 2 illustre les principales étapes du deuxième protocole.

Le réseau 2 reçoit tout d'abord de la part d'un terminal 3 un message MMS à destination du terminal 1 et envoie, lors d'une étape A, un message SMS de notification au terminal 1 pour lui indiquer qu'il a un message MMS pour le terminal 1.

Le terminal 1 envoie au réseau 2, lors d'une étape A', une notification d'acquittement du SMS indiquant si le terminal 1 a bien reçu ou non la notification SMS de présence d'un MMS sur le réseau 2. Ladite notification d'acquittement s'appelle la « Notification.response » dans la norme F-MMS.

Contrairement à ce qui se déroule dans un protocole de récupération automatique, dans la récupération différée, le message MMS n'est récupéré sur le réseau 2 qu'une fois qu'un utilisateur du terminal 1 en fait la requête.

Lors d'une étape A", l'utilisateur du terminal 1 agit sur le terminal 1, en actionnant une touche du clavier du terminal 1 par exemple, pour indiquer au terminal 1 son intention de consulter le message MMS.

Le terminal 1 envoie alors, lors d'une étape B, une instruction en protocole HTTP pour indiquer au réseau 2 l'intention de l'utilisateur de consulter le message MMS.

Le réseau 2 envoie le message MMS vers des moyens mémoire du terminal 1 lors d'une étape C.

Contrairement à la récupération automatique, la norme F-MMS ne prévoit pas que le terminal 1 envoie une notification d'acquittement du message MMS au réseau 2. Ainsi le réseau 2 ne sait pas avec certitude si le message MMS a été reçu ou non par le terminal 1.

La norme F-MMS indique alors qu'il est possible, mais non obligatoire, que le terminal 1 envoie au réseau 2, lors d'une étape E en pointillés, une notification d'indication de réception - ou « acknowledgement indication » - par laquelle le terminal 1 demande au réseau 2 d'envoyer un rapport de transmission du message MMS au terminal 3 qui est l'émetteur du message MMS. Ladite notification s'appelle la « m-Acknowledge.ind » dans la norme F-MMS. L'émission de la notification d'indication de réception ou la non émission de ladite notification peut indiquer au réseau 2 si le MMS a bien été récupéré sur le réseau 2 par le terminal 1 ou non.

Le protocole de récupération différée présente des inconvénients.

La notification d'indication de réception n'est pas un accusé de réception du message MMS par le terminal destinataire, mais juste une indication de réception, comme son nom l'indique. On l'utilise actuellement comme un moyen détourné de former un accusé de réception, mais ladite notification d'indication n'est pas totalement fiable. Elle peut ainsi être envoyée par erreur lorsque le message MMS n'a pas été transmis, ou peut ne pas être envoyée alors que le message MMS est transmis.

En outre, le fait qu'il n'y ait pas d'accusé de réception dans le cas du protocole de récupération différée provoque des problèmes de gestion du réseau, notamment dans le cas d'attente de messages. Les délais d'attente peuvent être longs.

### PRESENTATION DE L'INVENTION

L'invention propose de pallier ces inconvénients.

L'invention a principalement pour but de combler un vide dans la norme F-MMS pour la téléphonie fixe.

Un des autres buts de l'invention est de proposer un procédé de récupération différée de messages MMS sur un réseau par un terminal, le procédé comportant une étape d'accusé de réception du message par le terminal destinataire.

Un des autres buts de l'invention est de proposer un procédé de récupération différée de messages MMS sur un réseau par un terminal qui améliore la gestion du réseau, notamment dans le cas d'attente de messages.

Un des buts de l'invention est notamment d'éviter les délais d'attente inutiles.

A cet effet, l'invention propose un procédé de récupération différée d'un message MMS sur un réseau de télécommunications par un terminal de téléphonie, comportant une étape consistant à envoyer au réseau, à partir du terminal, une instruction pour que le réseau envoie le message MMS vers ledit terminal, caractérisé en ce qu'il comporte en outre une étape consistant à envoyer une notification d'indication de réception du message MMS du terminal vers le réseau à la suite de l'envoi du message MMS vers le terminal, ladite notification d'indication comportant un champ d'état de réception effective du message MMS par le terminal.

L'invention est avantageusement complétée par les caractéristiques suivantes, prises seules ou en une quelconque de leur combinaison techniquement possible :
- on indique dans le champ d'état de la notification si oui ou non le message MMS a été reçu par le terminal ;
- on indique au serveur dans un champ de la notification d'indication de réception d'effacer le message MMS du serveur ;
- on indique au serveur une destruction différée du message MMS ; et
- le terminal envoie l'instruction de récupération du message MMS dans un protocole HTTP.

L'invention concerne également un terminal et un réseau de mise en oeuvre du procédé.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, illustre schématiquement les principales étapes d'un premier protocole de récupération de message MMS de l'art antérieur ;
- la figure 2, déjà commentée, illustre les principales étapes de récupération de message MMS d'un deuxième protocole de l'art antérieur ;
- la figure 3 représente schématiquement une notification d'indication de réception du message MMS selon l'invention ; et
- la figure 4 représente les principales étapes de récupération de message MMS d'un procédé selon l'invention.

Dans l'ensemble des figures, les éléments et les étapes similaires portent des références numériques identiques.

### DESCRIPTION DETAILLEE

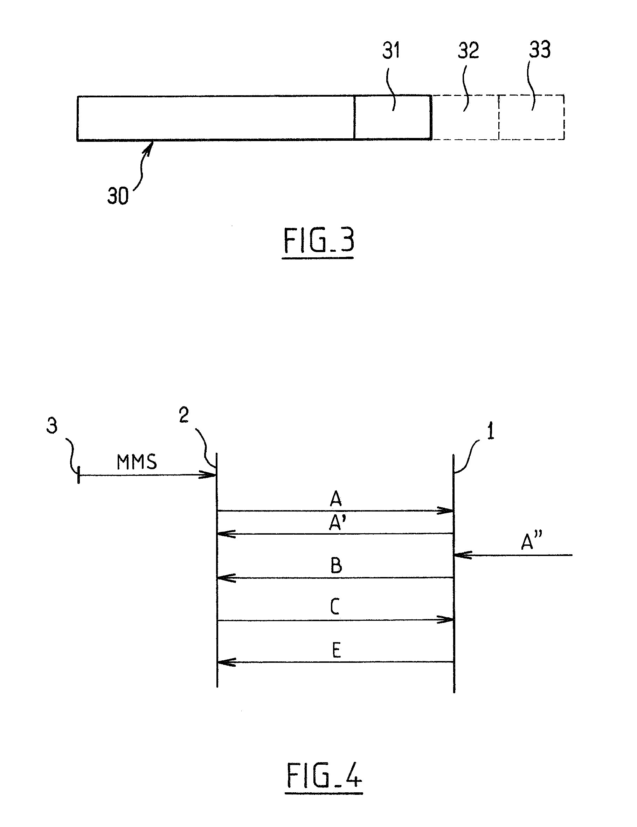

La figure 4 représente schématiquement les principales étapes de récupération de message MMS d'un procédé selon l'invention.

Le réseau 2 reçoit tout d'abord de la part d'un terminal 3 un message MMS à destination du terminal 1.

Le réseau 2 envoie, lors d'une étape A, un message SMS de notification au terminal 1 pour lui indiquer qu'il a un message MMS pour le terminal 1.

Lors d'une étape A', le terminal 1 envoie au réseau 2 une notification d'acquittement du SMS indiquant si le terminal 1 a bien reçu ou non la notification SMS lui notifiant la présence d'un MMS sur le réseau 2. Ladite notification d'acquittement s'appelle la « Notification.response » dans la norme F-MMS.

Lors d'une étape A", l'utilisateur du terminal 1 indique au terminal 1 son intention de consulter le message MMS en agissant sur le terminal 1, par exemple en actionnant une touche du clavier du terminal 1.

Lors d'une étape B, le terminal 1 envoie une instruction en protocole HTTP pour indiquer au réseau 2 l'intention de l'utilisateur de consulter le message MMS.

Le réseau 2 envoie le message MMS vers des moyens mémoire du terminal 1 lors d'une étape C.

Lors d'une étape E, le terminal 1 envoie vers le réseau 2 une notification d'indication de réception du message MMS. L'étape E du procédé selon l'invention est obligatoire et suit l'étape C d'envoi du message MMS du serveur 2 vers le terminal 1.

Un exemple de notification est schématiquement représenté sur la figure 3.

Une notification 30 d'indication selon l'invention comporte un champ d'état 31 de réception effective du message MMS par le terminal.

Préférentiellement, on utilise la notification d'indication de réception de la norme F-MMS. Avantageusement, la notification est la « m-Acknowledge.ind » de la norme F-MMS à laquelle on ajoute le champ d'état 31.

Très avantageusement, on indique dans le champ d'état 31 si oui ou non le message MMS a été reçu par le terminal 1. Le champ 31 porte donc une information binaire.

Avantageusement encore, on indique au serveur 2 dans un champ 32 de la notification 30 d'indication de réception d'effacer le message MMS du serveur 2 lorsque le champ 31 porte l'information de réception du message MMS par le terminal 1. On évite ainsi l'encombrement du serveur 2 par des messages qui ont bien été reçus par leurs destinataires.

On peut également indiquer au serveur 2 une destruction différée du message MMS dans un champ 33. On peut ainsi indiquer que même si le message MMS a été reçu par le terminal 1 destinataire, il faut garder le message sur le réseau pour une durée déterminée par le réseau 2, par exemple trois jours.

En variantes, les champs 32 et 33 peuvent être confondus ou le champ 33 peut être mis à la place du champ 32.

L'invention s'applique très avantageusement à un procédé de récupération différée d'un message MMS sur un réseau de télécommunications fixe. Elle s'applique très avantageusement à terminal de téléphonie fixe et à réseau de télécommunications fixe.

On comprend cependant qu'elle peut également s'appliquer au domaine de la téléphonie mobile.

## Revendications

1. Procédé de récupération différée d'un message MMS sur un réseau (2) de télécommunications par un terminal (1) de téléphonie, comportant une étape consistant à envoyer au réseau (2), à partir du terminal (1), une instruction pour que le réseau (2) envoie le message MMS vers ledit terminal (1), **caractérisé en ce qu'**il comporte en outre une étape consistant à envoyer une notification (30) d'indication de réception du message MMS du terminal (1) vers le réseau à la suite de l'envoi du message MMS vers le terminal, ladite notification (30) d'indication comportant un champ d'état (31) de réception effective du message MMS par le terminal.

2. Procédé selon la revendication 1, **caractérisé en ce qu'**on indique dans le champ d'état (31) de la notification si oui ou non le message MMS a été reçu par le terminal (1).

3. Procédé selon l'une des revendications 1 ou 2, **caractérisé en ce qu'**on indique au serveur (2) dans un champ (32) de la notification (30) d'indication de réception d'effacer le message MMS du serveur.

4. Procédé selon la revendication 3, **caractérisé en ce qu'**on indique au serveur (2) une destruction différée du message MMS.

5. Procédé selon l'une des revendications 1 à 4, **caractérisé en ce que** le terminal envoie l'instruction de récupération du message MMS dans un protocole HTTP.

6. Terminal (1) de téléphonie apte à coopérer avec un réseau (2) de télécommunications, comportant des moyens aptes à envoyer au réseau (2) une instruction pour que le réseau (2) lui envoie un message MMS, **caractérisé en ce qu'**il comporte en outre des moyens aptes à envoyer une notification (30) d'indication de réception du message MMS vers le réseau à la suite de l'envoi du message MMS, ladite notification (30) d'indication comportant un champ d'état (31) de réception effective du message MMS par le terminal.

7. Terminal selon la revendication 6, **caractérisé en ce qu'**il comporte des moyens aptes à indiquer dans le champ d'état (31) de la notification si oui ou non le message MMS a été reçu par le terminal (1).

8. Terminal selon l'une des revendications 6 ou 7, **caractérisé en ce qu'**il comporte des moyens aptes à indiquer au serveur (2) dans un champ (32) de la notification (30) d'indication de réception d'effacer le message MMS du serveur.

9. Réseau (2) de télécommunications apte à coopérer avec un terminal (1) de téléphonie, comportant des moyens aptes à envoyer au terminal (1) un message MMS en réponse à une instruction reçue du terminal, **caractérisé en ce qu'**il comporte en outre des moyens aptes à recevoir une notification (30) d'indication de réception du message MMS en provenance du terminal à la suite de l'envoi du message MMS, ladite notification (30) d'indication comportant un champ d'état (31) de réception effective du message MMS par le terminal.

10. Réseau selon la revendication 9, **caractérisé en ce qu'**il forme un réseau de téléphonie fixe.
